# EUROPEAN PATENT APPLICATION

(11) **EP 2 981 059 A1**
(43) Date of publication of application: **03.02.2016**
(21) Application number: 14773338.0
(22) Date of filing: 07.03.2014
(51) Int. Cl.: H04N 5/225, H04N 5/232, H04N 5/91

(54) **IMAGE RECORDING DEVICE, IMAGE RECODING METHOD, AND PROGRAM**

(30) Priority: 28.03.2013 JP 2013068312
(71) Applicant: NEC Corporation, Tokyo 108-8001 (JP)
(72) Inventor: KITAHARA Takenobu, Tokyo 1088001 (JP); YAJI Yoshitaka, Tokyo 1088001 (JP)
(74) Representative: Vossius & Partner Patentanwälte Rechtsanwälte mbB
(86) International application number: PCT/JP2014/055999
(87) International publication number: WO 2014/156568

(57) **Abstract**

A simulated-image output controller displays a subject-simulating image, serving as a simulated image representing a subject, on an output part. A subject data acquisition part reads one of or both of subject attribute data, which is stored in connection with an identification of the subject-simulating image, and subject-related data, relating to the subject attribute data, from a storage unit based on an instruction operation concerning the subject-simulating image being output on the output part. An image data acquisition part acquires image data which is produced by taking a shot of the subject. A subject information output controller outputs one of or both of the subject attribute data and the subject-related data, relating to the subject attribute data, which are read by the subject data acquisition part, in connection with the image data displayed on the output part.

## Description

### TECHNICAL FIELD

The present invention relates to an image recording device having a simple operability, an image recording method, and a program.

### BACKGROUND ART

With the spread of digital cameras and mobile phones, people have increasingly had an opportunity of managing records of children's growth by use of captured images. People have a desire for cameras which allow users to simply process captured images when users want to process captured images and which implements a function of simply managing records of children's growth.

Patent Literature Document 1 discloses a technology of simply managing records concerning the growth of children serving as subjects by displaying and recording data, relating to the number of years and months elapsed from birth dates of subjects, together with captured images.

### CITATION LIST

### PATENT LITERATURE DOCUMENT

Patent Literature Document 1: Japanese Patent Application Publication No. 2005-109569

### SUMMARY OF INVENTION

### TECHNICAL PROBLEM

However, the technology disclosed in Patent Literature Document 1 is inconvenient because it may increase troublesome operations for users in such a way that each user should select a "child mode" to select a child serving as a subject in order to specify the child's birth date.

It is an object of the present invention to provide an image recording device which can solve the above problem, an image recording method, and a program.

### SOLUTION TO PROBLEM

To achieve the above object, the present invention is directed to an image recording device including a simulated-image output controller configured to display a subject-simulating image, serving as a simulated image representing a subject, on an output part; a storage unit configured to store subject attribute data, which is stored in connection with the subject-simulating image, and subject-related data relating to the subject attribute data; a subject data acquisition part configured to read one of or both of the subject attribute data and the subject-related data from the storage unit based on an instruction operation concerning the subject-simulating image displayed on the output part; an image data acquisition part configured to acquire image data which is produced by taking a shot of the subject; and a subject information output controller configured to output one of or both of the subject attribute data and the subject-related data, which are read by the subject data acquisition part, in connection with the image data.

The present invention is directed to an image recording method including the steps of: displaying a subject-simulating image, serving as a simulated image representing a subject, on an output part; reading one of or both of subject attribute data, which is stored in connection with the subject-simulating image, and subject-related data, relating to the subject attribute data, from the storage unit based on an instruction operation concerning the subject-simulating image displayed on the output part; acquiring image data which is produced by taking a shot of the subject; and outputting one of or both of the subject attribute data and the subject-related data, which are read from the storage unit, in connection with the image data being output on the output part.

The present invention is directed to a program causing a computer of an image recording device to implement the functions of: a simulated-image output controller configured to display a subject-simulating image, serving as a simulated image representing a subject, on an output part; a subject data acquisition part configured to read one of or both of subject attribute data, which is stored in connection with the subject-simulating image, and subject-related data, relating to the subject attribute data, from the storage unit based on an instruction operation concerning the subject-simulating image displayed on the output part; an image data acquisition part configured to acquire image data which is produced by taking a shot of the subject; and a subject information output controller configured to output one of or both of the subject attribute data and the subject-related data, which are read by the subject data acquisition part, in connection with the image data.

### ADVANTAGEOUS EFFECTS OF INVENTION

The present invention can eliminate the necessity of setting multiple steps for selecting modes and subjects; hence, it is possible to easily manage records of subjects without causing troublesome operations for users.

### BRIEF DESCRIPTION OF DRAWINGS

Fig. 1 is a block diagram showing the minimum configuration of an image recording device according to an embodiment of the present invention.
Fig. 2 is a block diagram showing the configuration of the image recording device according to the first embodiment of the present invention.
Fig. 3 is a data table showing examples of subject data stored in a storage unit according to the first embodiment.
Fig. 4 is a table showing examples of facial feature data and operational settings of the image recording device which are stored in connection with icons according to the first embodiment.
Fig. 5A shows an example of an image displayed on an output part at a subject capture mode according to the first embodiment.
Fig. 5B shows an example of another example of an image displayed on the output part at a subject capture mode according to the first embodiment.
Fig. 5C shows a further example of an image displayed on the output part at an image capture mode according to the first embodiment.
Fig. 5D shows a further example of an image displayed on the output part at a subject capture mode according to the first embodiment.
Fig. 6 is a flowchart showing the processing of the image recording device according to the first embodiment.
Fig. 7A shows an example of a user's operation applied to the image recording device according to the first embodiment.
Fig. 7B shows another example of a user's operation applied to the image recording device according to the first embodiment.
Fig. 7C shows a further example of a user's operation applied to the image recording device according to the first embodiment.
Fig. 8 is a flowchart showing the processing of the image recording device according to the second embodiment of the present invention.

### DESCRIPTION OF EMBODIMENTS

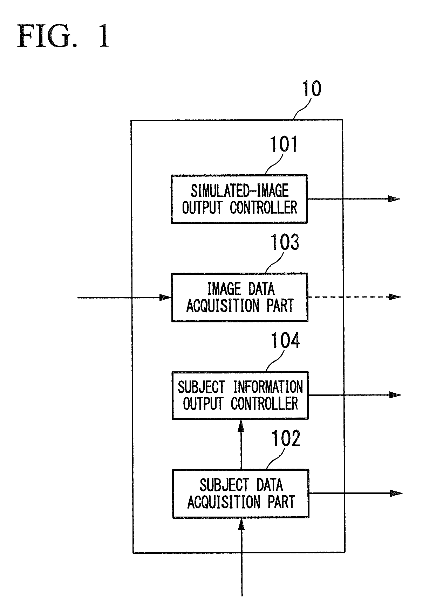

Fig. 1 is a functional block diagram showing the minimum configuration of the image recording device 10 according to an embodiment of the present invention.

As shown in Fig. 1, the image recording device 10 of the present embodiment includes at least the functional blocks such as a simulated-image output controller 101, a subject data acquisition part 102, an image data acquisition part 103, and a subject information output controller 104.

The simulated-image output controller 101 outputs a subject-simulated image, i.e. a simulated image representing a subject, to an output part.

The subject data acquisition part 102 reads from a storage unit one of or both of subject attribute data, which is stored in connection with an identification of a subject-simulated image, and subject-related data relating to subject attribute data based on an instruction operation concerning a subject-simulated image displayed on the output part.

The image data acquisition part 103 acquires image data which is produced by capturing an image of a subject.

The subject information output controller 104 outputs one of or both of subject attribute data and subject-related data, relating to subject attribute data, which are read by the subject data acquisition part 102 in connection with image data displayed on the output part.

For example, a controller (e.g. a CPU: Central Processing Unit) of the image recording device 10 executes control programs so as to embody the functional blocks such as the simulated-image output controller 101, the subject data acquisition part 102, the image data acquisition part 103, and the subject information output controller 104.

### <First Embodiment>

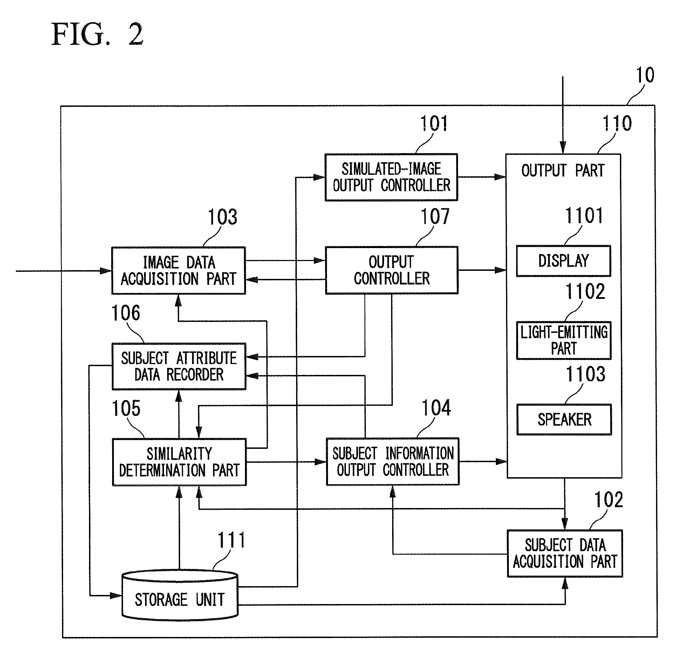

Fig. 2 is a functional block diagram showing the configuration of the image recording device 10 according to a first embodiment of the present invention.

As shown in Fig. 2, the image recording device of the first embodiment further includes a similarity determination part 105, a subject attribute data recorder 106, an output controller 107, an output part 110, and a storage unit 111 in addition to the functional blocks included in the minimum configuration of the image recording device 10 shown in Fig. 1.

The similarity determination part 105 determines a similarity by comparing facial feature data, connected to subject attribute data read by the subject data acquisition part 102, with facial feature data extracted from image data acquired by the image data acquisition part 103.

With a high similarity determined by the similarity determination part 105, the subject attribute data recorder 106 stores in the storage unit 111 one of or both of subject attribute data and subject-related data, relating to subject attribute data, which are output in the output part 110 in connection with image data being output in the output part 110.

The output controller 107 outputs various image data to the output part 110.

The output part 110 outputs various pieces of information under the control of the output controller 107. The output part 110 includes a display 1101, a flashing part 1102, and a speaker 1103. As the output part 110, for example, it is possible to use a screen used to display an image, a liquid crystal display, or an organic EL (Electro-Luminescence) display. To produce sound or voice, it is possible to use a speaker. In short, it is possible to use any types of output parts which can convey the output information using the five senses of humans. Additionally, it is possible to use any combination of those devices.

The storage unit 111 stores various pieces of information needed for the operation of the image recording device 10.

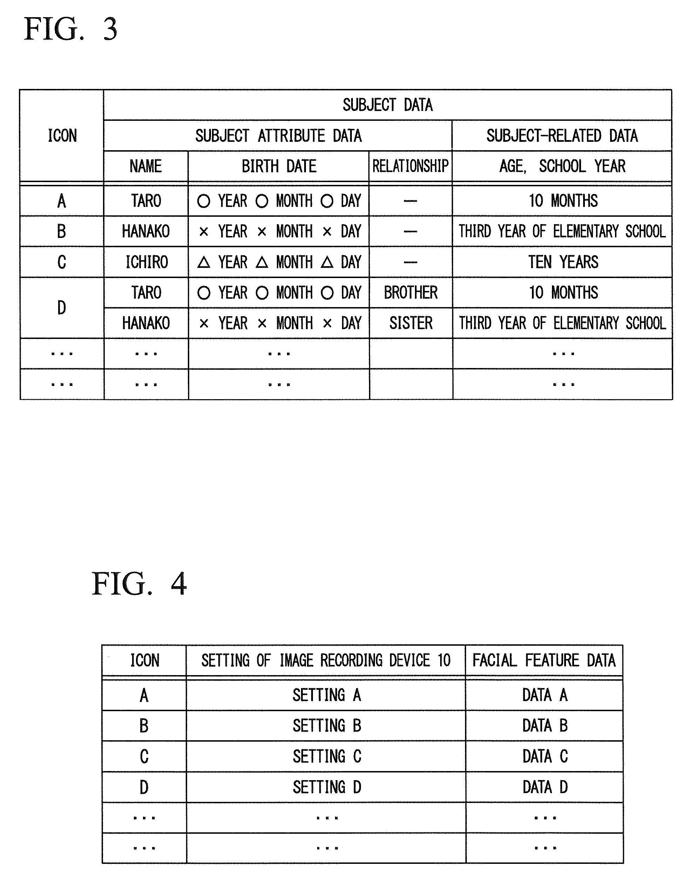

Fig. 3 shows an example of a data table stored in the storage unit 111 according to the present embodiment.

As shown in Fig. 3, the storage unit 111 stores subject attribute data and subject-related data in connection with icons A, B, C, D, ... in the form of a data table. Herein, the subject attribute data is unchangeable information such as the name of a subject, a date of birth, and a relationship. The subject-related data is information, relating to the subject attribute data, such as the age or the school year of a subject which will be changed in the lapse of time. In the embodiment of the present invention, the subject attribute data and the subject-related data will be collectively referred to as subject data.

In the data table shown in Fig. 3, the icons A-C are each related to subject data of a single person. For example, the icon A is related to the subject attribute data representing the name "Taro" and the date of birth "O Year O Month O Day" as well as the subject-related data representing the age "10 Months". The icon B is related to the subject attribute data representing the name "Hanako" and the date of birth "X Year X Month X Day" as well as the subject-related data representing "Third Year of Elementary School". The icon C is related to the subject attribute data representing the name "Ichiro" and the date of birth "Δ Year Δ Month Δ Day" as well as the subject-related data representing the age "10 Years''. As shown in the data table of Fig. 3, it is possible to allocate the data of two subjects "Taro" and "Hanako" to one icon like the icon D. Alternatively, it is possible to allocate three or more subjects to one icon.

Fig. 4 is a table showing an example of the operational setting of the image recording device 10 in connection with icons.

In the data table shown in Fig. 4, the icon A is connected to a setting A and facial feature data A. Similarly, in the data table, the icon B is connected to a setting B and facial feature data B; the icon C is connected to a setting C and facial feature data C; the icon D is connected to a setting D and facial feature data D.

As shown in Fig. 3, when "Taro" indicates the subject connected to the icon A, the facial feature data A listed in the data table shown in Fig. 4 represents the facial features specifying "Taro" such as the relative positions and sizes of facial parts as well as the shapes of eyes, cheekbones, a nose, and a jaw. The setting A is information including a parameter, which is set by a user and which determines whether or not to achieve a face recognition using the facial feature data A. The setting A is information including a parameter which determines whether or not to display characters of a predetermined title, e.g. "Taro 10 Months", on the output part 110 based on subject data. The other settings B, C, D, ... include similar parameters which are set by users.

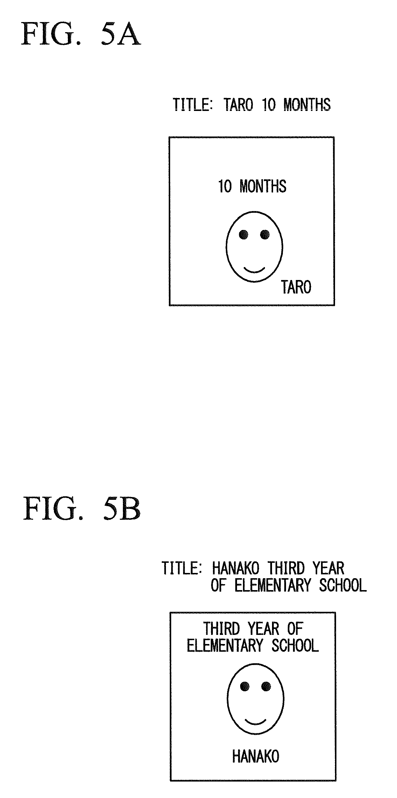

Figs. 5A to 5D show examples of images displayed on the output part 110 at a subject capture mode.

Before capturing an image of "Taro", each user should manipulate the image recording device 10 to start its operation at first. Herein, a user's operation is similar to the foregoing operation to start a smart phone, in which, for example, a user may slide a power switch of a smart phone or a user may press a power button of a smart phone. The image recording device 10 starts its operation in response to a user's operation. Next, the output controller 107 of the image recording device 10 displays an initial screen on the output part 110. Herein, a user carries out an operation to move a folder or the like to display the icon A on the output part 110. As described above in conjunction with Figs. 3 and 4, the icon A is related to the subject data about "Taro", the setting A which achieves a face recognition of "Taro" with the image recording device 10 while displaying various pieces of information about "Taro" based on subject data, and the facial feature data A used to achieve a face recognition of "Taro".

When a user makes an operation of tapping the icon A so as to activate the setting A in the image recording device 10, as shown in Fig. 5A, the similarity determination part 105 recognizes the subject "Taro" by way of the image/face recognition technology. When the display setting is turned on, the subject information output controller 104 displays the characters of "10 Months" in proximity to the face of "Taro" displayed on the output part 110. Additionally, the subject information output controller 104 displays the title suited to the subject and its age, e.g. the characters "Taro 10 Months", on the output part 110.

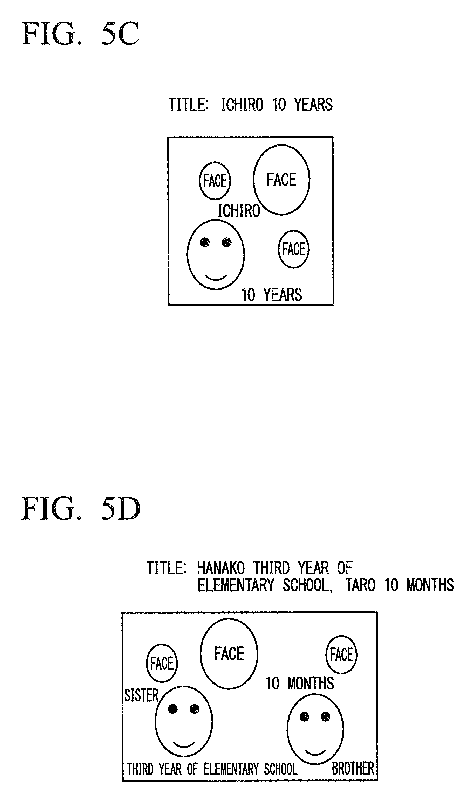

To capture images of "Taro" and "Hanako", a user makes an operation of tapping the icon D so as to activate the setting D in the image recording device 10. In this case, as shown in Fig. 5D, the similarity determination part 105 recognizes the subjects "Taro" and "Hanako" by way of the image/face recognition technology. The subject information output controller 104 displays the characters of "10 Months" corresponding to the age and the characters of "Brother" corresponding to the relationship in proximity to the face of "Taro" displayed on the output part 110. Additionally, the subject information output controller 104 displays the characters of "Third Year of Elementary School" corresponding to the school year and the characters of "Sister" corresponding to the relationship in proximity to the face of "Hanako" displayed on the output part 110. Similarly, to capture an image of "Hanako", a user makes an operation of tapping the icon B so as to activate the setting B in the image recording device 10, and therefore an image shown in Fig. 5B will be displayed on the output part 110. To capture an image of "Ichiro", a user makes an operation of tapping the icon C so as to activate the setting C in the image recording device 10, and therefore an image shown in Fig. 5C will be displayed on the output part 110.

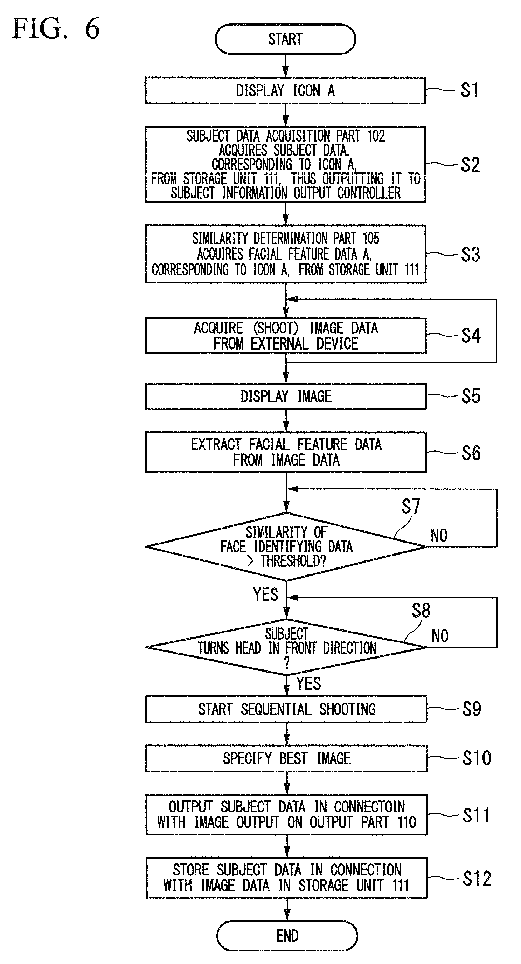

Fig. 6 is a flowchart showing the processing of the image recording device 10 according to the first embodiment of the present invention. The following description refers to a flow of processing when a user captures an image of "Taro".

The simulated-image output controller 101 of the image recording device 10 displays the icon A on the output part 110 (step S1). Due to tapping when a user taps the icon A displayed on the output part 110, the output part 110 of the image recording device 10 outputs a tap signal, representing that the icon A is being tapped, to the subject data acquisition part 102 and the similarity determination part 105. Upon receiving a tap signal, the subject data acquisition part 102 acquires subject data, corresponding to the icon A, from the storage unit 111, thus outputting the acquired subject data to the subject information output controller 104 (step S2). Upon receiving a tap signal, the similarity determination part 105 of the image recording device 10 acquires the facial feature data A, corresponding to the icon A, from the storage unit 111 (step S3).

Next, the image data acquisition part 103 of the image recording device 10 acquires image data which is auto-focused by a camera arranged externally of the image recording device 10 (step S4). The step S4 will be repeated. Due to the execution of step S4, it is possible to sequentially display images each of which is captured at each time of executing step S4.

Upon acquiring image data from an external device, the image data acquisition part 103 outputs the image data to the output controller 107. The output controller 107 outputs the inputted image data to the display 1101 of the output part 110 (step S5). At this time, the output controller 107 extracts the facial feature data of "Taro" from the inputted image data (step S6). The output controller 107 outputs the extracted facial feature data of "Taro" to the similarity determination part 105. At this time, the similarity determination part 105 makes a comparison between the facial feature data A, which represents the facial features of "Taro" corresponding to the icon A and which is obtained in step S3, and the facial feature data input from the output controller 107 by way of geometric matching and statistical-quantification matching. As described above, facial feature data is data representing the relative positions and sizes of facial parts as well as the shapes of eyes, cheekbones, a nose, and a jaw. The similarity determination part 105 determines whether or not the similarity, i.e. the result of a comparison between the facial feature data A and the facial feature data input from the output controller 107, exceeds the predetermined threshold (step S7).

When the similarity does not exceed the predetermined threshold (in case of "NO"), the similarity determination part 105 determines that the image data input from the output controller 107 does not include an image of "Taro"; thus, the processing returns to step S6. When the similarity exceeds the predetermined threshold (in case of "YES"), the similarity determination part 105 determines that the image data input from the output controller 107 includes an image of "Taro".

The image data acquisition part 103 outputs the input image to the output controller 107. At this time, the output controller 107 may output a flashing signal to the flashing part 1102 to flash or an audio signal to the speaker 1103 in order to attract attention of "Taro" to turn his head in a front direction. The output controller 107 carries out an operation to attract subject's attention by determining whether or not the age of a subject exceeds a threshold.

The output controller 107 determines whether or not a "Taro" serving as a subject turns his head in a front direction based on the facial feature data extracted in step S6 (step S8). The determination process can be carried out using the existing face recognition technology. Herein, the process of step S8 is repeated when the output controller 107 determines that "Taro" does not turn his head in a front direction (in case of "NO"). Upon determining that "Taro" turns his head in a front direction (in case of "YES"), the output controller 107 outputs a sequential shooting signal, instructing a sequential shooting operation, to the image data acquisition part 103.

The image data acquisition part 103 starts a sequential shooting operation in response to a sequential shooting signal (step S9). Next, the image data acquisition part 103 outputs a series of sequentially-shot images to the output controller 107. Upon receiving a series of sequentially-shot images, the output controller 107 specifies the best image among a series of images (step S10). Herein, the output controller 107 specifies the best image with reference to an image having the best smiling face, an image having no blinking of eyes, an image having the best quality, and an image selected by each user. It is possible to select the best image by use of the known technology.

Next, the output controller 107 specifies and outputs the best image to the similarity determination part 105 and the subject attribute data recorder 106. Upon receiving the specified best image data, the similarity determination part 105 specifies the display position of the subject data of "Taro" within the scope of the input image, thus outputting the positional coordinate data of the display position, added to the image data, to the subject information output controller 104. Upon receiving the image data added the positional coordinate data, the subject information output controller 104 outputs the subject data of "Taro" input by the process of step S2 to the output part 110 in connection with the image of "Taro" which the output controller 107 outputs to the output part 110 based on the positional coordinate data (step S11). At this time, the output part 110 outputs the image such as the image shown in Fig. 5A, thus displaying the name and the age of a subject in proximity to the face of a subject based on the subject data.

As the image output by the output part 110, it is possible to display one of the subject attribute data and the subject-related data in proximity to the face of a subject. Based on a user's operation such as a flicking operation applied to the display position of the output part 110, it is possible for the subject information output controller 104 to change the output position of the subject data displayed in proximity to the face of a subject. Alternatively, it is possible to add the information concerning the subject data as the Exif information or the title of an image, wherein each user may determine which information should be added to the image in advance.

The subject information output controller 104 outputs the same data as the data output in step S11 to the subject attribute data recorder 106 as well. The subject attribute data recorder 106 stores in the storage unit 111 the image data of "Taro" obtained from the output controller 107 in connection with the subject data of "Taro" (step S 12).

In the present embodiment, it is possible to substitute a user's operation to click the shutter for the image shooting for the determination process of step S8. Additionally, the present embodiment does not necessarily employ a sequential-shooting operation of step S9; hence, it is possible to take a shot of one or more images.

Heretofore, the embodiment of the present invention has been described with reference to the flow of processing of the image recording device 10. According to the processing of the image recording device 10, a user's operation to tap an icon activates a shooting function to start a shooting operation with the setting achieving face recognition of a subject while displaying the name and the age of a subject, thus specifying and recording the best image added the subject information. This eliminates the necessity of determining the settings of selecting modes and subjects; hence, it is possible to demonstrate an effect whereby each user can easily take a shot of the best image. Since the image recording device 10 specifies the best image so as to add the subject information to the best image, it is possible for each user to simply manage records of subjects without causing troublesome operations.

### <Second Embodiment>

Next, the image recording device 10 according to the second embodiment of the present invention will be described.

The present embodiment will be described with respect to the case in which a user determines a setting for the image recording device 10 by way of a different user's operation than the first embodiment. Herein, a user carries out an operation to take shots of "Taro" and "Hanako".

The configuration of the image recording device 10 according to the second embodiment of the present invention is identical to the configuration of the image recording device 10 according to the first embodiment shown in Fig. 2; hence, the same constituent elements are designated using the same reference signs, thus omitting their descriptions.

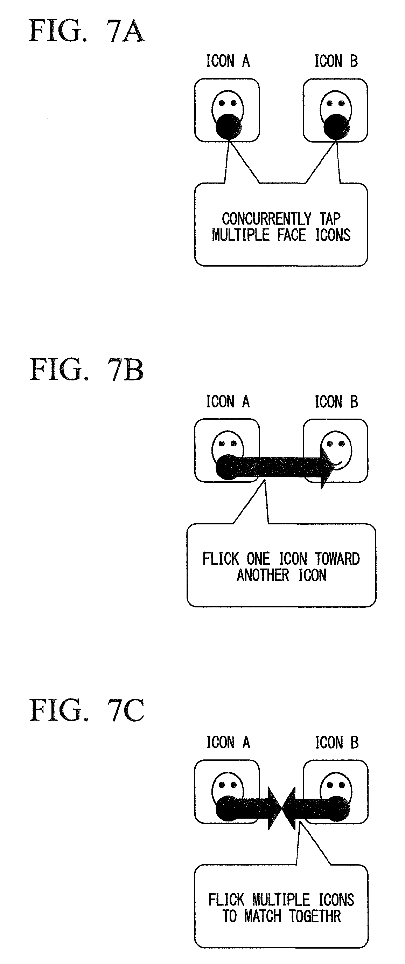

Figs. 7A to 7C show a series of operations which a user carries out to determine a setting for the image recording device 10 according to the second embodiment.

The icons A and B shown in Figs. 7A-7C are identical to the icons A and B shown in Figs. 3 and 4. Therefore, a user may select the icon A specifying "Taro" in order to activate the image recording device 10 displaying the subject data of "Taro". Additionally, a user may select the icon B specifying "Hanako" in order to activate the image recording device 10 displaying the subject data of "Hanako".

Upon concurrently tapping two icons as shown in Fig. 7A, a user may concurrently determine settings for the image recording device 10 adapted to "Taro" and "Hanako". That is, it is possible for a user to determine the same settings as the foregoing settings of the icon D, shown in Figs. 3 and 4, for the image recording device 10. Herein, a user's operation can be an operation to flick one icon towards another icon as shown in Fig. 7B or an operation to flick two icons to match together as shown in Fig. 7C.

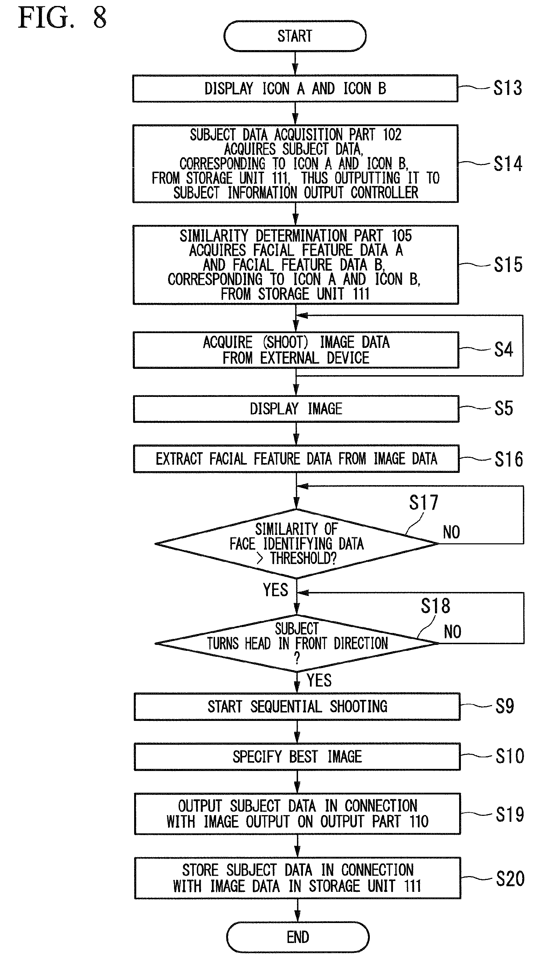

The flow of processing of the image recording device 10 according to the second embodiment of the present invention will be described with reference to the flowchart of Fig. 8.

The simulated-image output controller 101 of the image recording device 10 displays the icons A and B on the output part 110 (step S 13). In this connection, the simulated-image output controller 101 may display other icons than the icons A and B on the output part 110. Due to a concurrently-tapping operation in which a user concurrently taps the icons A and B displayed on the output part 110, the output part 110 of the image recording device 10 outputs a concurrently-tapping signal, representing that the icons A and B are being concurrently tapped by a user, to the subject data acquisition part 102 and the similarity determination part 105. Upon receiving the concurrently-tapping signal, the subject data acquisition part 102 acquires the subject data, corresponding to the icons A and B, so as to output the acquired subject data to the subject information output controller 104 (step S14). Upon receiving the concurrently-tapping signal, the similarity determination part 105 of the image recording device 10 acquires the facial feature data A and the facial feature data B, corresponding to the icons A and B, from the storage unit 111 (step S15).

Next, the image data acquisition part 103 of the image recording device 10 acquires the image data auto-focused by a camera arranged externally of the image recording device 10 (step S4). The step S4 will be repeated. Due to the execution of step S4, it is possible to sequentially display images each of which is captured at each time of executing step S4.

Upon acquiring image data from an external device, the image data acquisition part 103 outputs the image data to the output controller 107. The output controller 107 outputs the input image data on the display 1101 of the output part 110 (step S5). At this time, the output controller 107 extracts the facial feature data of "Taro" and "Hanako" from the input image data (step S16). Subsequently, the output controller 107 outputs the extracted facial feature data of "Taro" and "Hanako" to the similarity determination part 105. At this time, the similarity determination part 105 obtains the facial feature data A, representing the facial features of "Taro" corresponding to the icon A, and the facial feature data B, representing the facial features of "Hanako" corresponding to the icon B, in step S 15 so as to make a comparison between the facial feature data A, B and the facial feature data of "Taro" and "Hanako" input from the output controller 107 by way of geometric matching and statistical-quantification matching, thus determining whether or not the similarity representing the comparison result exceeds the predetermined threshold (step S 17).

When the similarity does not exceed the predetermined threshold (in case of "NO"), the similarity determination part 105 determines that the image data input from the output controller 107 does not include the images of "Taro" and "Hanako"; then, the processing returns to step S17. When the similarity exceeds the predetermined threshold (in case of "YES"), the similarity determination part 105 determines that the image data input from the output controller 107 includes the images of "Taro" and "Hanako".

The image data acquisition part 103 outputs the input image to the output controller 107. At this time, the output controller 107 may output a flashing signal to the flashing part 1102 to flash or an audio signal to the speaker 1103 in order to attract attention of "Taro" to turn his head in a front direction. The output controller 107 carries out an operation to attract attention of a subject by determining whether or not the age of a subject exceeds the threshold.

Based on the facial feature data of "Taro" and "Hanako" extracted in step S16, the output controller 107 determines whether or not "Taro" and "Hanako" serving as subjects turn their heads in a front direction (step S18). The determination process can be achieved using the existing face recognition technology. The process of step S18 will be repeated when the output controller 107 determines that "Taro" and "Hanako" do not turn their heads in a front direction (in case of "NO"). When the output controller 107 determines that "Taro" and "Hanako" turn their heads in a front direction (in case of "YES"), the output controller 107 outputs a sequential-shooting signal, instructing a sequential-shooting operation, to the image data acquisition part 103.

The image data acquisition part 103 starts a sequential-shooting operation in response to a sequential-shooting signal (step S9). Next, the image data acquisition part 103 outputs a series of sequentially-shot images to the output controller 107. Upon receiving a series of sequentially-shot images, the output controller 107 specifies the best image among the input images (step S10). Herein, the output controller 107 specifies the best image with reference to an image having the best smiling face, an image having no blinking of eyes, an image having the best quality, and an image selected by each user. It is possible to select the best image by use of the known technology.

Next, the output controller 107 outputs the specified best image to the similarity determination part 105 and the subject attribute data recorder 106. Upon receiving the specified best image data, the similarity determination part 105 specifies the display positions of the subject data of "Taro" and "Hanako" within the scope of the input image so as to output to the subject information output controller 104 the positional coordinate data of the display positions added the image data. Upon receiving the image data added the positional coordinate data, the subject information output controller 104 outputs the subject data of "Taro" and "Hanako", input by the process of step S2, to the output part 110 based on the positional coordinates in connection with the images of "Taro" and "Hanako" which the output controller 107 outputs to the output part 110 (step S 19). The output part 110 may output the image shown Fig. 5D, thus displaying the name and the age of a subject in proximity to the face of a subject based on the subject data.

In this connection, a user's operation, in which a user flicks the display position of the output part 110, may cause the subject information output controller 104 to change the position of the subject data displayed in proximity to the face of a subject. Alternatively, it is possible to add the information concerning subject data as the Exif information or the title of an image; hence, each user may determine which information should be added to an image.

The subject information output controller 104 outputs the same data as the process of step S11 to the subject attribute data recorder 106. The subject attribute data recorder 106 stores the subject data of "Taro" and "Hanako" in the storage unit 111 in connection with the image data supplied from the output controller 107 (step S20).

In the present embodiment, the concurrently-tapping operation in which a user concurrently taps the icons A and B may be a user's operation to flick one icon towards another icon or a user's operation to flick icons to match together as shown in Figs. 7A-7C. In this connection, each user may concurrently tap or flick three or more icons, thus determining the settings, related to all the icons being operated, for the image recording device 10.

In the present embodiment, it is possible to substitute a user's operation to click the shutter to take shots of images for the determination process of step S18. The present embodiment does not necessarily carry out a sequential-shooting operation in step S9; hence, it is possible to take a shot of one or more images.

Heretofore, the embodiment of the present invention has been described with respect to the flow of processing of the image recording device 10. According to the processing of the image recording device 10, it is possible to achieve settings suited to multiple subjects upon starting a shooting function by way of the predetermined operation in which each user may tap or flick multiple icons. This eliminates the necessity of determining the settings of selecting modes and subjects in multiple steps; hence, it is possible to demonstrate an effect in which each user can easily take a shot of the best image. Since the image recording device 10 specifies the best image so as to add the subject information to the best image, it is possible to simply manage records of subjects without causing troublesome operations for users.

In the above, some embodiments of the present invention have been described with respect to the image recording device 10, which includes a computer system. The foregoing processes are stored in non-transitory computer-readable storage media in the form of programs; hence, the computer system may read and execute the programs so as to achieve the foregoing processes. Herein, non-transitory computer-readable storage media refer to magnetic disks, magneto-optical disks, CD-ROM, DVD-ROM, and semiconductor memory. Alternatively, it is possible to deliver computer programs to computers via communication lines; hence, each computer may receive and execute computer programs.

The above programs can be produced to achieve part of the foregoing functions.

Additionally, it is possible to produce the programs as differential files (or differential programs) which can be combined with other programs pre-installed in each computer system so as to achieve the foregoing functions.

The present application claims priority on Japanese Patent Application No. 2013-68312 filed March 28, 2013, the entire content of which is incorporated herein by reference.

### REFERENCE SIGNS LIST

- 10: image recording device
- 101: simulated-image output controller
- 102: subject data acquisition part
- 103: image data acquisition part
- 104: subject information output controller
- 105: similarity determination part
- 106: subject attribute data recorder
- 107: output controller
- 110: output part
- 111: storage unit

## Claims

1. An image recording device comprising:
a simulated-image output controller configured to display a subject-simulating image, serving as a simulated image representing a subject, on an output part;
a storage unit configured to store subject attribute data, which is stored in connection with the subject-simulating image, and subject-related data relating to the subject attribute data;
a subject data acquisition part configured to read one of or both of the subject attribute data and the subject-related data from the storage unit based on an instruction operation concerning the subject-simulating image displayed on the output part;
an image data acquisition part configured to acquire image data which is produced by taking a shot of the subject; and
a subject information output controller configured to output one of or both of the subject attribute data and the subject-related data, which are read by the subject data acquisition part, in connection with the image data.

2. The image recording device according to claim 1, further comprising a similarity determination part configured to determine a similarity by way of a comparison between facial feature data, included in the subject attribute data, and facial feature data, which the image data acquisition part extracts from the image data, wherein the subject information output controller outputs one of or both of the subject attribute data and the subject-related data, based on the similarity determined by the similarity determination part, in connection with the image data being output on the output part.

3. The image recording device according to claim 2, further comprising a subject attribute data recorder configured to store one of or both of the subject attribute data and the subject-related data, which are output on the output part, in connection with the image data being output on the output part in the storage unit when the similarity determination part determines the similarity higher than a predetermined threshold.

4. The image recording device according to any one of claims 1 to 3, wherein the simulated-image output controller displays a plurality of subject-simulating images on the output part, and wherein the subject information output controller reads one of or both of the subject attribute data of the subject, corresponding to the subject-simulating image under the instruction operation, and the subject-related data from the storage unit, thus outputting one of or both of the subject attribute data and the subject-related data, which are read from the storage unit, in connection with the image data of the corresponding subject.

5. The image recording device according to any one of claims 1 to 4, wherein the subject information output controller changes an output position of one of or both of the subject attribute data and the subject-related data being output on the output part based on the instruction operation on one of or both of the subject attribute data and the subject-related data being output on the output part.

6. An image recording method comprising:
displaying a subject-simulating image, serving as a simulated image representing a subject, on an output part;
reading one of or both of subject attribute data, which is stored in connection with the subject-simulating image, and subject-related data, relating to the subject attribute data, from a storage unit based on an instruction operation concerning the subject-simulating image displayed on the output part;
acquiring image data which is produced by taking a shot of the subject; and
outputting one of or both of the subject attribute data and the subject-related data, which are read from the storage unit, in connection with the image data being output on the output part.

7. A program causing a computer of an image recording device to implement the functions of:
a simulated-image output controller configured to display a subject-simulating image, serving as a simulated image representing a subject, on an output part;
a subject data acquisition part configured to read one of or both of subject attribute data, which is stored in connection with the subject-simulating image, and subject-related data, relating to the subject attribute data, from a storage unit based on an instruction operation concerning the subject-simulating image displayed on the output part;
an image data acquisition part configured to acquire image data which is produced by taking a shot of the subject; and
a subject information output controller configured to output one of or both of the subject attribute data and the subject-related data, which are read by the subject data acquisition part, in connection with the image data.
